# EUROPEAN PATENT SPECIFICATION

(11) **EP 2 532 838 B1**
(45) Date of publication and mention of the grant of the patent: **25.02.2015**
(21) Application number: 12171133.7
(22) Date of filing: 07.06.2012
(51) Int. Cl.: F01D 11/00, F16J 15/32

(54) **A compliant plate seal assembly for a turbo machine**
Elastische Plattendichtungsanordnung für eine Turbomaschine
Joint d'etancheité pour turbine

(30) Priority: 10.06.2011 US 201113157870
(43) Date of publication of application: 12.12.2012
(73) Proprietor: General Electric Company, Schenectady, New York 12345 (US)
(72) Inventor: Rao, Ajay Keshava, Niskayuna, NY New York 12309 (US); Deo, Hrishikesh Vishvas, Niskayuna, NY New York 12309 (US)
(74) Representative: Lee, Brenda

(56) References cited:
- WO-A1-2006/016098
- GB-A- 2 462 255
- US-A1- 2010 143 102

## Description

### BACKGROUND

Embodiments presented herein relate generally to sealing systems, and specifically to compliant plate seal assembly for turbo machines.

Turbo machines are generally provided with moving components such as a rotating shaft and rotors and stationary components such as the turbo machine casing and stators. Turbo machines generally operate at high working fluid pressures. At these high pressures, the working fluid is susceptible to leakage through a clearance between the moving components and stationary components. Such a leakage may affect the performance of the turbo machine. Dynamic sealing devices are known in the art. The sealing devices may include labyrinth seals, leaf seals or the like. While labyrinth seals do not rub against the moving components of the turbo machine, the sealing provided by the labyrinth seals is not very efficient. Leaf seals provide better sealing, but are prone to seal rubbing, and seal wear and tear. Moreover, the conventional seals are not adaptable depending upon the operating pressure, and type of machine.

US 2010/143102 describes a self-correcting seal assembly comprising a plurality of compliant plates coupled circumferentially to a stationary component, at least one slot in the compliant plates extending from the stationary component towards a rotor and a resistance member coupled to a stationary component. The resistance member comprises at least one annular ring extending from the stationary component towards a rotor and through the slot. The seal assembly is configured to create passive feedback on hydrostatic forces in response to a tip-clearance between the rotor and tips of the compliant plates.

Thus, there is a need for a turbo machine seal wherein the gap between the seal and the rotating component is adjustable.

### BRIEF DESCRIPTION

The present invention resides in a seal assembly for a turbo machine, in a turbo machine and in a method as recited in the appended claims.

### DRAWINGS

These and other features, aspects, and advantages of the present invention will become better understood when the following detailed description is read with reference to the accompanying drawings in which like characters represent like parts throughout the drawings, wherein:
FIG. 1 is a perspective view of a compliant plate seal assembly in accordance with an exemplary embodiment of the present invention;
FIG. 2 illustrates a resistance member of the compliant plate seal according to one embodiment;
FIG. 3 illustrates a resistance member of the compliant plate seal according to another embodiment;
FIG. 4 is cross sectional view of a typical compliant plate seal assembly in accordance with an exemplary embodiment of the present invention;
FIG. 5 illustrates two components of leakage flow through the compliant plate seal assembly in accordance with an exemplary embodiment of the present invention;
FIG. 6 illustrates forces acting on the compliant plate proximate a high pressure area of a turbo machine in accordance with an exemplary embodiment of the present invention;
FIG. 7 illustrates forces acting on the compliant plate proximate a low pressure area of the turbo machine in accordance with an exemplary embodiment of the present invention;
FIG. 8 illustrates a perspective view of an exemplary compliant plate seal assembly in a turbo machine, according to one embodiment;
FIG. 9 is the cross sectional view of the exemplary compliant plate seal in accordance with an embodiment of the present invention;
FIG. 10 illustrates a compliant plate with a triangular shaped slot in accordance with an embodiment of the present invention;
FIG. 11 illustrates a compliant plate with a rectangular shaped slot in accordance with an embodiment of the present invention;
FIG. 12 is the plot of pressure variation on a tip of the exemplary compliant plate, and the tip of a compliant plate with a tip slot proximate a high pressure area of the turbo machine in accordance with an exemplary embodiment of the present invention; and
FIG. 13 is the plot illustrating the effect of hydrostatic torque on a tip clearance for a compliant plate seal and for a compliant plate seal with a tip slot proximate the high pressure area of a turbo machine in accordance with an exemplary embodiment of the present invention.
FIG. 14 is the perspective view of a turbo machine provided with a conventional seal.

### DETAILED DESCRIPTION OF EMBODIMENTS

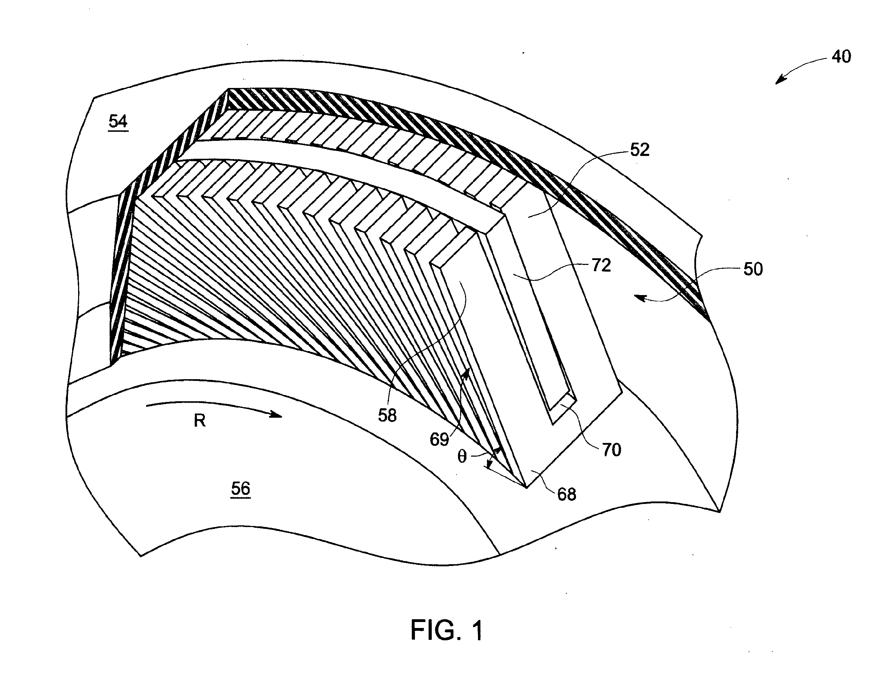

Embodiments presented herein relate to a seal assembly for a turbo machine. The seal assembly disclosed herein may be used with any turbo machine such as, but not limited to, gas turbine, steam turbine, compressors, or aircraft engines. The turbo machine includes a stationary component such as a stator, or housing, or any other stationary part disposed proximate to a rotary component. The rotary component may include a rotor of the turbo machine. The turbo machine may typically include a series of alternate stator and rotor stages. A pressurized fluid is passed through the turbo machine through the series of stator and rotor stages. The rotor is generally configured to rotate upon the passage of the pressurized fluid through the turbo machine. Alternately, the rotation of the rotor may cause the flow of the pressurized fluid. Typically, a gap is provided between the rotary component and the stationary component to avoid wear due to contact. The pressurized fluid may leak through the gap, and such leakage may affect the performance of the turbo machine. Such a flow is referred to a leakage flow or a secondary flow. The leakage flow occurs from a high pressure area to a low pressure area of the turbo machine. An exemplary compliant plate seal assembly for sealing the fluid leakage is shown in FIG. 1.

FIG. 1 illustrates a turbo machine 40 (not fully shown). The turbo machine 40 includes a stationary component 54 and a rotary component 56. A seal assembly 50 including a plurality of compliant plates 52 disposed between the stationary component 54 and the rotary component 56 of a turbo machine 40. The seal assembly 50 is configured to seal a gap between the stationary component 54 and the rotary component 56. Each compliant plate 52 have a root 58 disposed proximate to the stationary component 54 and a tip 68 disposed proximate to the rotary component 56. The tip 68 refers to the free end of compliant plate 52 disposed proximate to the rotary component 56. A gap 69 between successive compliant plates 52 increases from the rotary component 56 to the stationary component 54. In an embodiment, the plurality of compliant plates 52 are oriented at an angle θ with respect to the rotary component 56.

Each compliant plate 52 further includes a plate slot 70 extending from the root 58 towards the tip 68. A resistance member 72 is disposed in the plate slots 70 of the plurality of compliant plates 52. In an embodiment, the resistance member 72 is annular in shape and extends circumferentially about the stationary component 54. The resistance member 72 may be a continuous ring. In another embodiment, the resistance member 72 may include a plurality of segments assembled to form a ring.

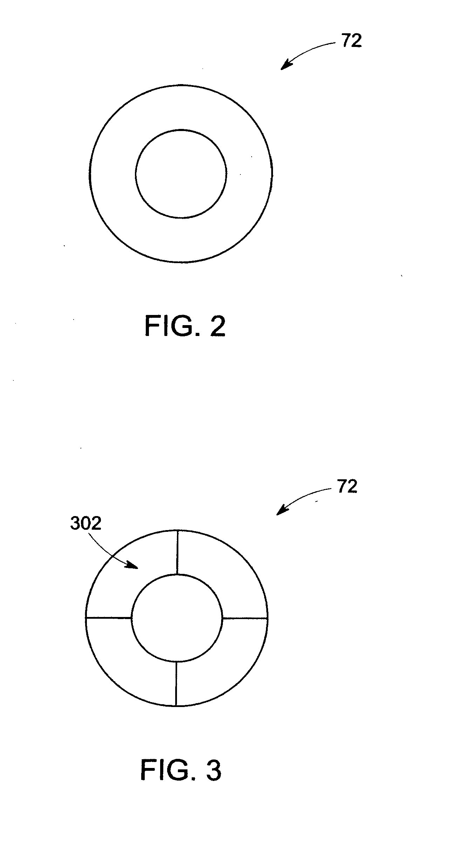

FIG. 2 illustrates the front view of the resistance member 72. The resistance member 72 is an annular ring disposed circumferentially about the stationary component 54. In an embodiment, the resistance member may be a continuous ring as shown in FIG. 2. In other words the resistance member may be a single piece annular ring.

In an alternate embodiment, the resistance member may include a plurality of segments 302 as shown in FIG. 3. The segments 302 may be joined together to form a complete annular ring. It may be noted that the resistance member 72 shown in FIG. 3 is for the purpose of illustration and the resistance member with any suitable number of segments may be envisioned.

It may be noted that the seal assembly shown in FIG. 1 is for the purpose of illustration and do not limit the scope of teachings presented herein. For example, embodiments of the seal assembly 50 with multiple plate slots and multiple resistance members 72 may be envisioned.

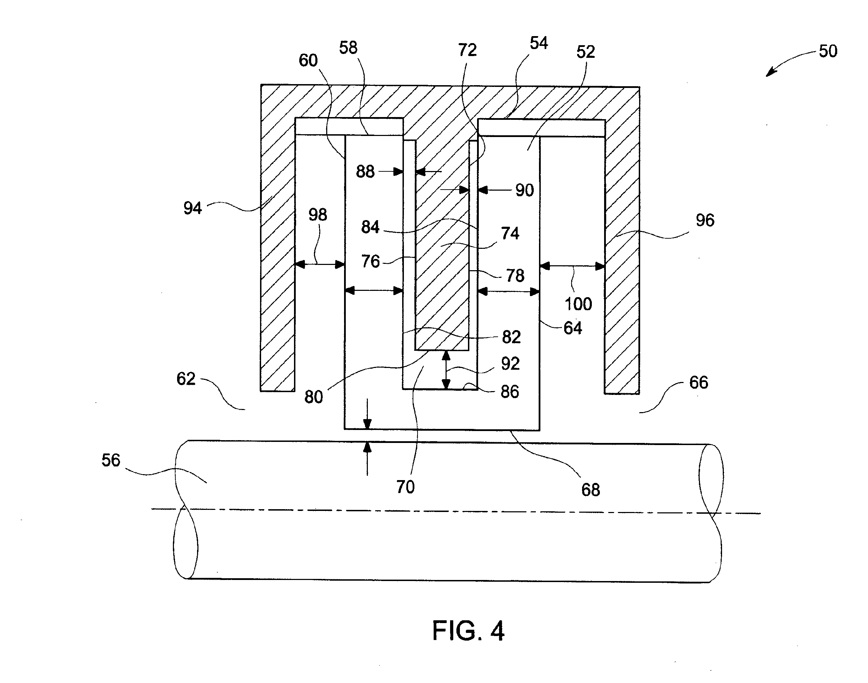

FIG. 4 illustrates a cross sectional view of the compliant plate assembly 50. The seal assembly 50 is disposed between a high pressure area 62 and a low pressure area 66. The seal assembly 50 extends along an axis of the turbo machine from the high pressure area 62 to the low pressure area 66. FIG. 4 further illustrates the resistance member 72 provided inside the plate slot 70 of the compliant plate 52. The plate slot 70 includes a first surface 82 that faces a leading surface 76 of the resistance member 72, and a second surface 84 that faces a trailing surface 78 of the resistance member 72. A front gap 88 is defined between the first surface 82 of the compliant plate 52and the leading surface 76 of the resistance member 72. Similarly, a back gap 90 is defined between the second surface 84 of the compliant plate 52 and the trailing surface 78 of the resistance member 72. A bridge gap is defined between the lower surface 80 of the resistance member 72 and the lower surface 86 of the plate slot 70.

The seal assembly 50 may further include a front ring 94 and a back ring 96. The front ring 94 and the back ring 96 may be coupled to the stationary component 54 of the turbo machine. The front ring 94 extends circumferentially across the leading surface 60 of the compliant plates 52 and the back ring 96 extends circumferentially along the trailing surface 64 of the compliant plates 52. A gap defmed between the front ring 94 and the leading surface 60 is referred to as a front ring gap 98, and a gap between the back ring 96 and the trailing surface 64 is referred to as a back ring gap 100.

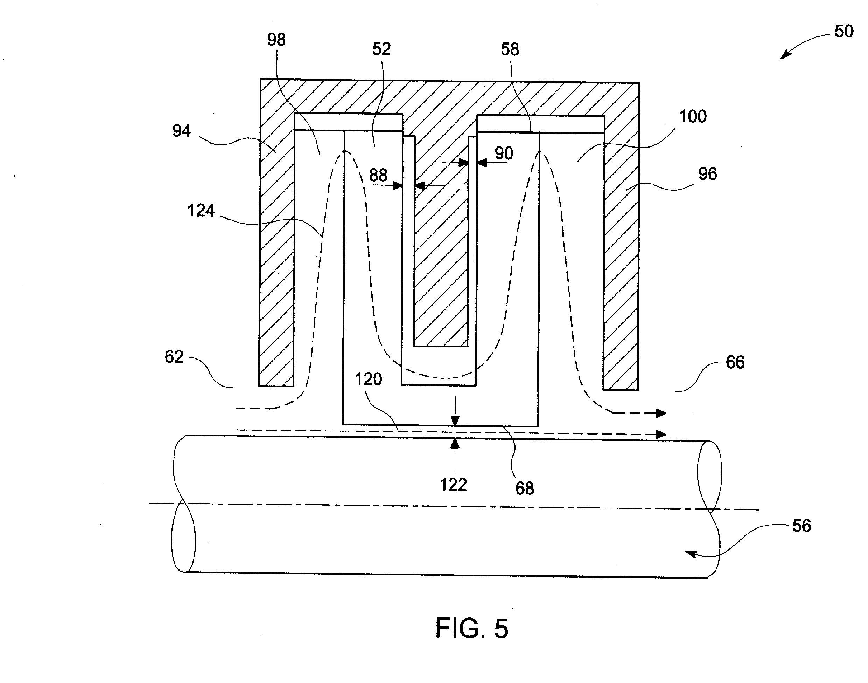

FIG. 5 illustrates the leakage flow of the pressurized fluid through the seal assembly. The leakage flow includes two components. A first component 120 of the leakage flow occurs through a tip clearance 122 defmed between the tip 68 and the rotary component 56. A second component 124 flows through the gaps between adjacent compliant plates 52. As discussed earlier, the gaps between adjacent compliant plates 52 increase from the tip 68 to the root 58. These gaps provide a large flow area and a small resistance to the leakage flow 124. The primary resistance to the second component 124 of the leakage flow is provided by the front gap 88 and the back gap 90. Therefore, the front gap 88 and the back gap 90 have to be relatively small to limit the leakage flow.

Proximate to the front gap 88, the leakage flow 124 is radially inward and from the high pressure area 62 towards the low pressure area 66. Proximate to the back gap 90, the flow 124 is radially outward and from the high pressure area 62 towards the low pressure area 66.

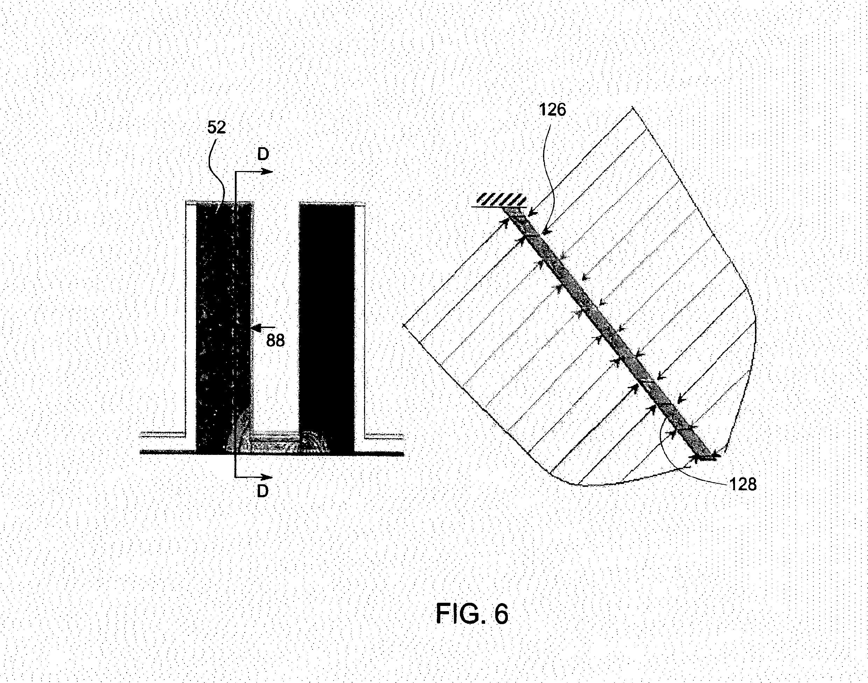

FIG. 6 illustrates pressure gradients close to the front gap 88 defined between the first surface of the compliant plate 52 and the leading surface of the resistance member. The radial pressure gradient close to the front gap 88 (section D-D) is positive, *i.e.,* the pressure increases from the seal inner diameter to the seal outer diameter. Arrows in the section D-D indicate the pressure and the length of the arrows is proportional to the pressure. As a result of positive pressure gradient, the pressure on a top face 126 of the compliant plate 52 is slightly higher than the pressure on a bottom face 128 of the compliant plate 52 at section D-D. This leads to a resultant hydrostatic blow-down torque on this section of the compliant plate 52. Smaller front gap 88 ensures a larger pressure gradient and a greater hydrostatic blow-down torque.

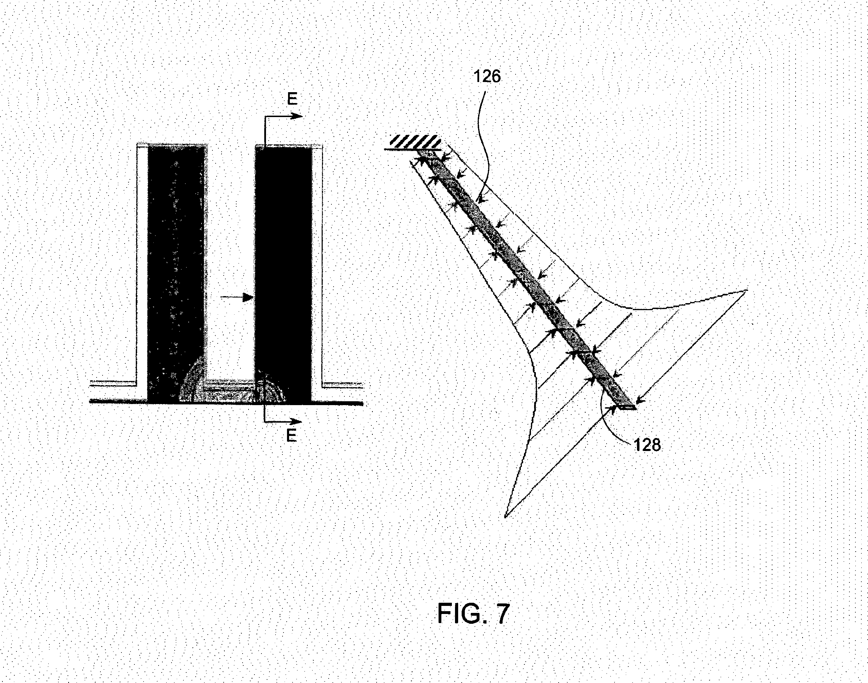

FIG. 7 illustrates pressure gradients close to the back gap 90 defined between the second surface of the compliant plate 52 and the trailing surface of the resistance member. The radial pressure gradient close to the back gap 90 is negative, *i.e.* the pressure decreases from the seal inner diameter to the seal outer diameter. Arrows in the section E-E indicate the pressure and the length of the arrows is proportional to the pressure. As a result of the negative radial pressure gradient, the pressure on the top surface 126 of the compliant plate 52 is slightly lower than the pressure on the bottom surface 128 of the compliant plate 52 at the section E-E. This leads to a resultant hydrostatic lift torque on this section of the compliant plate 52. Smaller back gap 90 ensures a larger pressure gradient and a greater hydrostatic lift torque.

The sum of the hydrostatic torque over the entire surface of the compliant plate 52 determines whether the total hydrostatic torque acting on the compliant plate is a lift torque or a blow down torque. The sum of the hydrostatic torque over the entire surface of the compliant plate determines the clearance that the tip of the compliant plate maintains from the rotary component.

Referring to FIGS. 5-7, when the tip clearance 122 increases to a larger value, the flow-area for the first component 120 of the leakage flow increases and the associated flow resistance reduces. As a result, the flow velocity of the first component 120 of the leakage flow increases significantly and the static pressure close to the tip 68 reduces as compared to the case with small tip clearance. The flow resistance to the second component 124 of the leakage flow remains substantially the same and the velocity of the second component 124 remains the same. As a result, the pressure at the entrance of the compliant plate 52 (near the front ring 94 and away from the tip 68) remains substantially the same as in case of the small tip gap.

Comparing the two cases of smaller tip clearance and larger tip clearance, the pressure close to the tip 68 is lower for the larger tip clearance, whereas the pressure close to the root 58 are substantially same in both cases. As a result, for larger tip clearance, a more positive radial pressure gradient or less negative radial pressure gradient is present. As discussed earlier, a more positive pressure gradient leads to a greater blow-down torque or lower lift-off torque on the compliant plates 52, causing the compliant plates 52 to blow down and the tip clearance 122 to reduce.

This hydrostatic blow-down torque acting on the compliant plates 52, when the tip clearance 122 increases, tends to reduce the tip clearance 122. This leads to self correcting hydrostatic lift/blow-down torque with passive feedback from tip clearance.

Once designed, the compliant plates position at a set clearance. Turbo machines may have different clearance requirement depending on the pressure at which the seal may be operated. For example, the turbo machine at a high pressure section may require low clearance as compared to the low pressure section. Typically, turbo machines have a series of rotary components and stationary components. Each section may be operating at a particular pressure. Further, turbo machines may have sections such as a High Pressure (HP) section, Intermediate Pressure (IP) section, and a Low Pressure

(LP) section. Each of these sections may need sealing and the clearance requirement for each of the sections may be different. Further sealing requirement of different turbo machines may be different. For example, tip clearance requirement for a gas turbine may be different from the tip clearance requirement for a steam turbine.

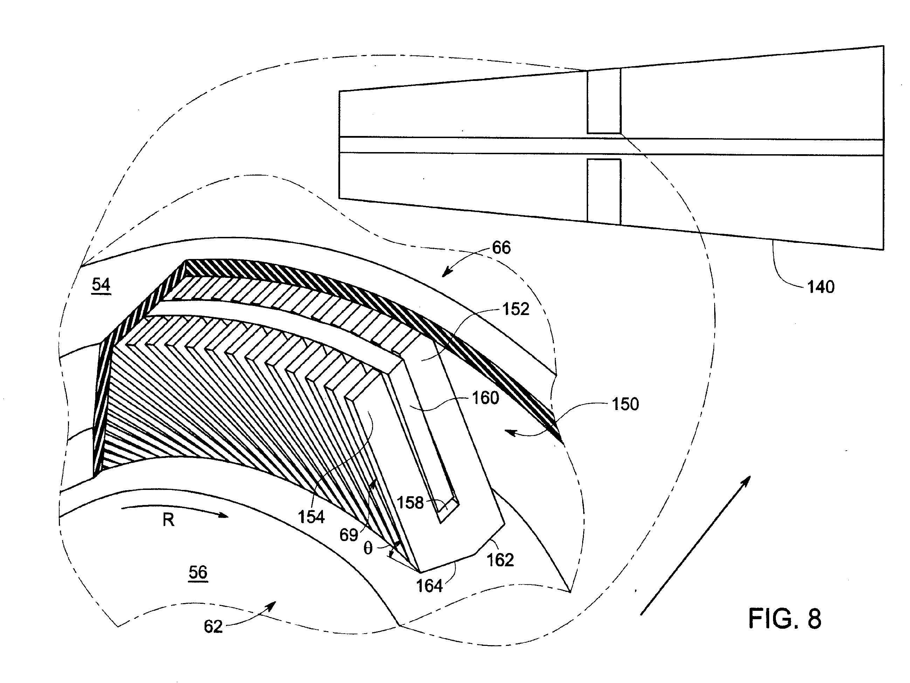

Compliant plate seals discussed with respect to FIGS. 1-7 settle at a set clearance and thereby avoid seal rubbing and seal wear and tear. Embodiments presented herein, describe a compliant plate seal assembly which may further provide the flexibility to alter the set clearance to meet the requirement of a turbo machine in which the seal assembly is disposed. The seal assembly according to one embodiment is shown on FIG. 8.

FIG. 8 illustrates a turbo machine 40. A small portion of the turbo machine 40 along with a seal assembly 150 is illustrated in detail in FIG. 8. The turbo machine 40 includes a stationary component 54 and a rotary component 56. The seal assembly 150 includes a plurality of compliant plates 152 disposed between the stationary component 54 and the rotary component 56 of the turbo machine 40. The seal assembly 150 extends between a high pressure area 62 and a low pressure area 66. The seal assembly 150 is configured to seal a gap between the stationary component 54 and the rotary component 56. Each compliant plate 152 have a root 154 disposed proximate to the stationary component 54 and a tip 162 disposed proximate to the rotary component 56. The tip 162 refers to the free end of compliant plate 152 disposed proximate to the rotary component 56. A gap 156 between successive compliant plates 152 increases from the rotary component 56 to the stationary component 54. In an embodiment, the compliant plates 152 are oriented at an angle θ with respect to the rotary component 56. The value of the angle θ may vary between 30° to 60°.

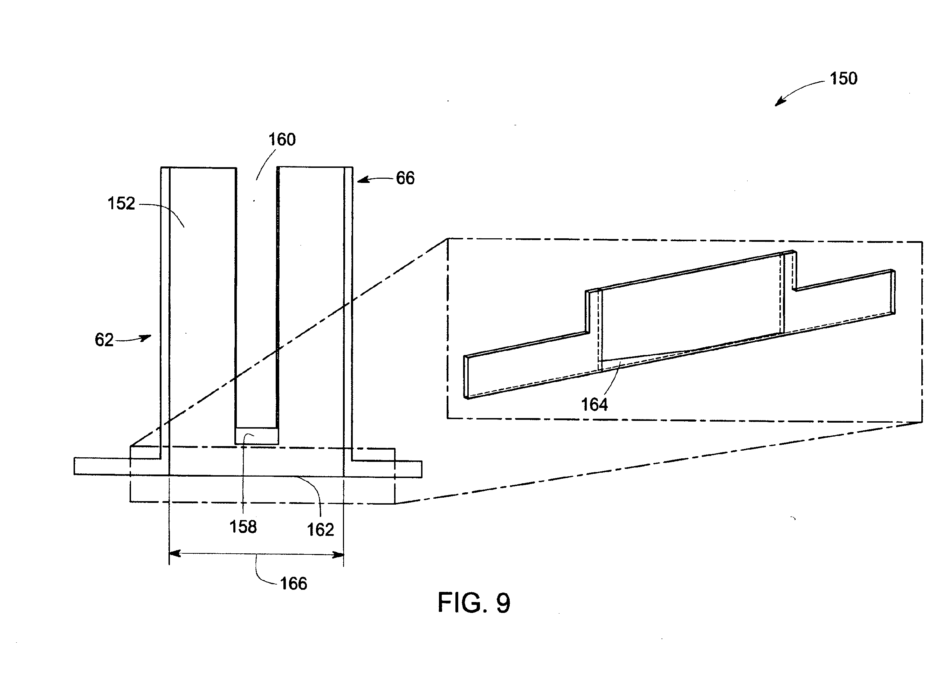

Each compliant plate 152 further includes a plate slot 158 extending from the root 154 towards the tip 162. A resistance member 160 is disposed in the plate slots 158 of the plurality of compliant plates 152. In an embodiment, the resistance member 160 is annular in shape and extends circumferentially about the stationary component 54. The resistance member 160 may be a continuous ring. In another embodiment, the resistance member 160 may include a plurality of segments assembled to form a ring. The resistance member 160 may have configurations described in connection with FIGS. 2-3. The tip 162 of each compliant plate 152 is provided with a tip slot 164 proximate the high pressure area 62. The tip slot 164 is illustrated with reference to FIG. 9.

FIG. 9 illustrates the compliant plate seal assembly 150 according to an exemplary embodiment. In the illustrated embodiment, the seal extends from the high pressure area 62 to the low pressure area 66. The tip 162 of each compliant plate 152 has the tip slot 164 proximate the high pressure area 62. The tip slot 164 extends along the tip 162 from the high pressure area 62 towards the low pressure area 66. The tip slot 164 may extend up to 50 percent of the span 166 of the tip 162. The span 166 of the seal assembly 150 represents the width of the compliant plates 152 between the high pressure area 62 and the low pressure area 66.

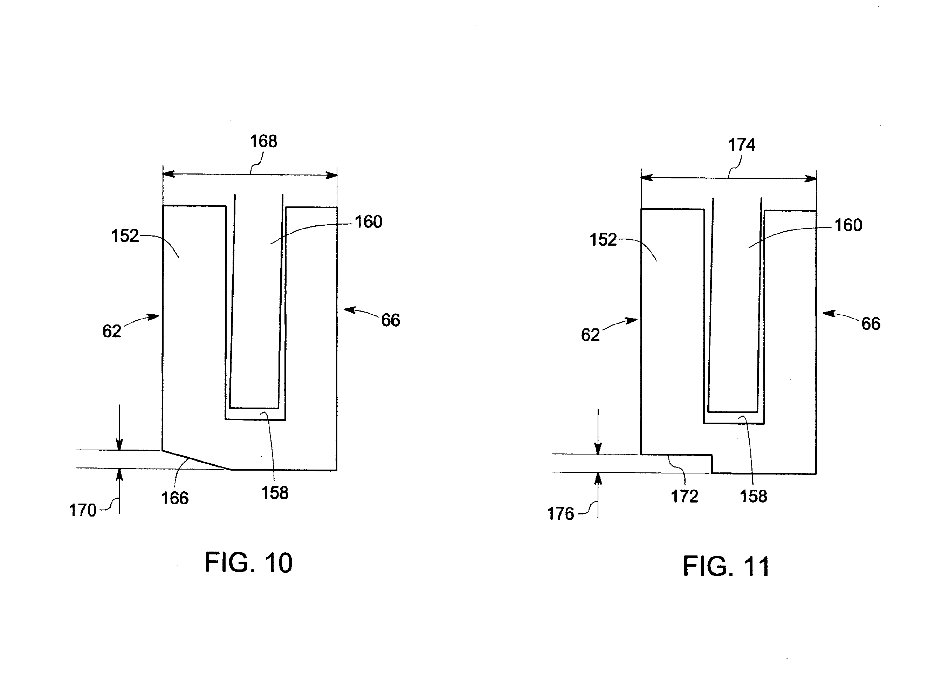

In an embodiment, the tip slot may be triangular shaped as shown in FIG. 10. FIG. 10 illustrates a triangular tip slot 166 proximate the high pressure area 62 of the compliant plate 152. The tip slot 166 may extend up to half of a span 168 of the compliant plate 152. A height 170 of the tip slot 166 may vary from 30 mils to 200 mils.

In an alternate embodiment, the tip slot may be rectangular as shown in FIG. 11. FIG. 11 illustrates a rectangular tip slot 172 proximate the high pressure area 62 of the compliant plate 152. The tip slot 172 may extend up to half of a span 174 of the compliant plate 152. A height 176 of the tip slot 172 may vary from 30 mils to 200 mils.

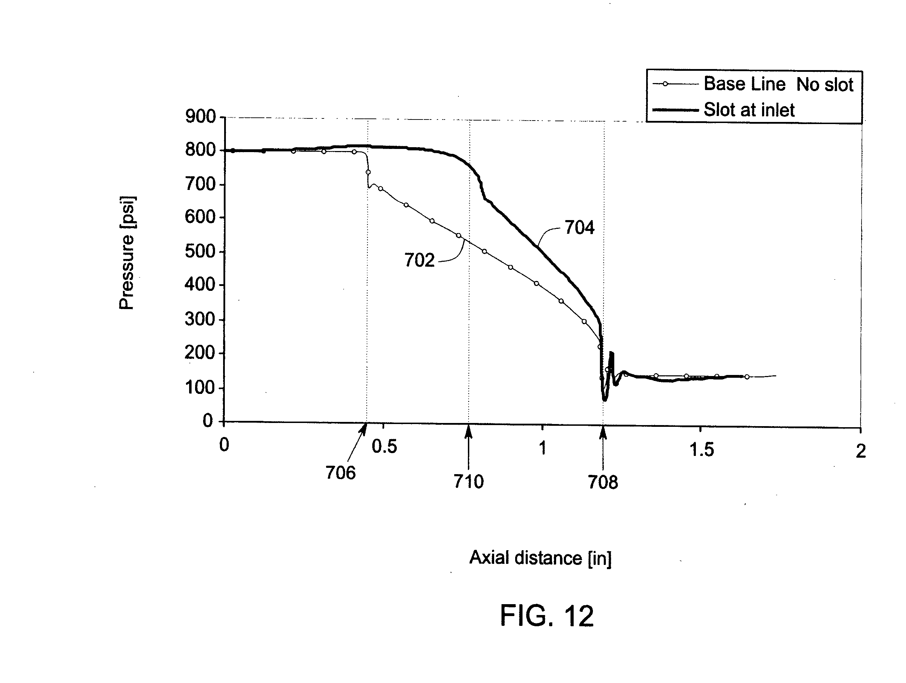

By varying the span of the tip slot along the tip of the compliant plate, the clearance between the tip and the rotary component may be altered. The effect of the tip slot on tip clearance is explained with the help of FIG. 12.

FIG. 12 illustrates the pressure variation on the tip of a compliant plate. Pressure on the tip (in psi) is represented along the Y axis, and an axial span (in inches) of the tip of the compliant plate is represented along the X axis. FIG. 12 includes two curves 702 and 704. Curve 702 illustrates the pressure variation on the tip of a compliant plate seal. The distance along the X axis up to point 706 represents the high pressure area. The span from point 706 to 708 represents the span of the tip of the compliant plate. Between point 706 and 708, pressure reduces gradually as shown by curve 702. Beyond point 708, the pressure again stabilizes at a constant value. The area beyond the point 708 represents the low pressure area of the turbo machine. Curve 704 illustrates the pressure variation on the tip of a compliant plate seal with a tip slot provided on the tip proximate the high pressure area of the turbo machine. As illustrated by curve 704, the pressure remains high till point 710 along the X axis in case of a compliant plate with a tip slot. Beyond point 710 the pressure reduces gradually and stabilizes at a constant value.

It may be appreciated that the pressure variation along the tip changes with the introduction of the tip slot proximate the high pressure area of the turbo machine. It may also be appreciated that the area under the curves 702 and 704 represents the hydrostatic force on the tip of the compliant plate. As illustrated in FIG. 12, area under the curve 704 is greater than the area under the curve 702. Thus, the hydrostatic pressure on the tip of a compliant plate with a tip slot is higher than the hydrostatic pressure on the tip of a normal compliant plate.

An increased hydrostatic pressure has the effect of pushing the tip upwards away from the rotary component. Thus, an increased hydrostatic pressure implies a higher tip clearance. It may be appreciated that by changing the shape and size of the tip slot on the tip, the pressure distribution along the tip may be varied and the compliant plate seal may be made to settle at a desired tip clearance as per the requirement of the turbo machine. The compliant plate seal assembly described herein may thus be modified by providing a tip slot at the tip of the plurality of compliant plates based on the turbo machine type and the pressure of operation of the seal assembly.

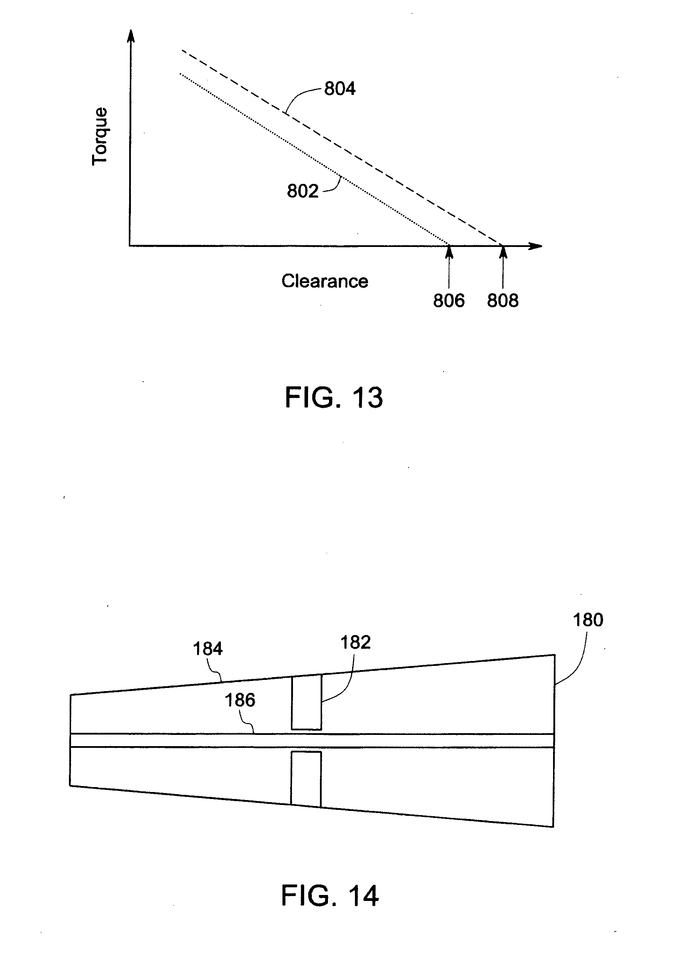

FIG. 13 further illustrates the effect of providing a tip slot proximate the high pressure area of the turbo machine. FIG. 13 illustrates a plot of a hydrostatic torque on the compliant plate versus the tip clearance. The tip of the compliant plate is subjected to a hydrostatic pressure resulting in a hydrostatic torque on the compliant plate. The hydrostatic torque (in Newton-meters) is represented along the Y axis and the clearance (in inches) is represented along the X axis. FIG. 13 includes two curves 802 and 804. Curve 802 represents the variation of hydrostatic torque with the tip clearance for a normal compliant plate, and curve 804 represents the variation of hydrostatic torque with the tip clearance for a compliant plate with a tip slot. A positive hydrostatic torque implies that there is a net lifting torque on the compliant plate. The compliant plates settle at a clearance wherein the net hydrostatic torque is zero. As evident from FIG. 13, a normal compliant plate settles at a tip clearance represented by point 806 and the compliant plate with a tip slot settles at a tip clearance represented by point 808. Hence, the equilibrium tip clearance of the seal assembly may be varied by the designer by providing the tip slot on the tip of the compliant plates.

Referring to FIG. 14, a turbo machine 180 with a conventional seal assembly 182 is disclosed. The seal assembly 182 may be any type of convention seal available such as, but not limited to a brush seal, labyrinth seal and the like. The seal assembly is disposed between a stationary component 184 and a rotary component 186 of the turbo machine 180. In accordance with the aspects of the present invention, the turbo machine 180 may be modified by removing the conventional seal assembly 182 and replacing the conventional seal assembly 182 by the seal assembly 150 discussed with reference to FIGS. 8-13.

Embodiments presented herein may be helpful in providing a seal assembly which could be modified to suit customized requirements. The seal assembly, according to various embodiments may be modified post manufacturing, so that a manufactured seal may be modified to fit any type of turbo machine and any pressure range.

The present invention has been described in terms of several embodiments solely for the purpose of illustration.

## Claims

1. A seal assembly (50) configured to provide a sealing between a high pressure area and a low pressure area in a turbo machine (40), the seal assembly comprising:
a plurality of compliant plates (52) disposed between a stationary component (54) and a rotary component (56) of the turbo machine, and coupled circumferentially along the stationary component, wherein each compliant plate comprises a tip (68) configured to be disposed facing the rotary component, at least one plate slot (70) extending from the stationary component (54) towards the rotary component (56); and
at least one annular resistance member (72) configured to be coupled to the stationary component and disposed in the at least one plate slot (70) in the compliant plates (52), **characterised in that** it further comprises a tip slot (164) in a portion of the tip proximate the high pressure area, wherein the tip slot (164) extends from a side of the tip proximate the high pressure area towards the low pressure area and comprises a triangular shaped slot.

2. The seal assembly of any preceding claim, wherein the tip slot (164) extends up to 50 percent of a span of the tip.

3. The seal assembly of any preceding claim, wherein the tip slot (164) is configured to effect a pressure distribution on the tip of the compliant plates (52) such that a defined clearance is established between the tip of the plurality of compliant plates (52) and the rotary component (56) during operation of the turbomachine.

4. The seal assembly of claim 3, wherein the defined clearance depends on at least one of a pressure at which the seal assembly (50) is operated and a turbo machine type.

5. The seal assembly of any preceding claim, wherein the compliant plates (52) are oriented at an angle with respect to the rotary component (56).

6. The seal assembly of any preceding claim, wherein the annular resistance member (72) comprises a continuous ring.

7. The seal assembly of any one of claims 1 to 6, wherein the annular resistance member (72) comprises a plurality of segments (302) assembled to form a ring.

8. A turbo machine comprising:
a stationary component (54);
a rotary component (56); and
the seal assembly of any preceding claim disposed between the stationary component (54) and the rotary component (56).

9. A method comprising:
removing an existing seal assembly disposed between a stationary component (54) and a rotary component (56) of a turbo machine (40); and
replacing the existing seal assembly with a seal assembly according to any one of claims 1 to 7.

## Patentansprüche

1. Dichtungsanordnung (50), die konfiguriert ist, um eine Dichtung zwischen einem Hochdruckbereich und einem Niederdruckbereich in einer Turbomaschine (40) bereitzustellen, wobei die Dichtungsanordnung Folgendes umfasst:
mehrere nachgiebige Platten (52), die zwischen einer stationären Komponente (54) und einer drehenden Komponente (56) der Turbomaschine angeordnet sind und umfänglich entlang der stationären Komponente gekoppelt sind, wobei jede stationäre Platte Folgendes umfasst: eine Spitze (68), die konfiguriert ist, um der drehenden Komponente zugewandt zu liegen, mindestens einen Plattenschlitz (70), der sich von der stationären Komponente (54) zur drehenden Komponente (56) hin erstreckt; und
mindestens ein ringförmiges Widerstandsglied (72), das konfiguriert ist, um an der stationären Komponente gekoppelt zu werden, und in dem mindestens einem Plattenschlitz (70) in den nachgiebigen Platten (52) angeordnet ist, **dadurch gekennzeichnet, dass** sie ferner einen Spitzenschlitz (164) in einem Abschnitt der Spitze nahe dem Hochdruckbereich umfasst, wobei sich der Spitzenschlitz (164) von einer Seite der Spitze nahe dem Hochdruckbereich zum Niederdruckbereich hin erstreckt und einen dreiecksförmigen Schlitz umfasst.

2. Dichtungsanordnung gemäß einem vorhergehenden Anspruch, wobei sich der Spitzenschlitz (164) bis zu 50 Prozent einer Spannweite der Spitze erstreckt.

3. Dichtungsanordnung gemäß einem vorhergehenden Anspruch, wobei der Spitzenschlitz (164) konfiguriert ist, um eine Druckverteilung auf der Spitze der nachgiebigen Platten (52) zu bewirken, so dass während des Betriebs der Turbomaschine ein definierter Abstand zwischen der Spitze der mehreren nachgiebigen Platten (52) und der drehenden Komponente (56) hergestellt wird.

4. Dichtungsanordnung gemäß Anspruch 3, wobei der definierte Abstand von einem Druck, bei dem die Druckanordnung (50) betrieben wird, und/oder einem Turbomaschinentyp abhängt.

5. Dichtungsanordnung gemäß einem vorhergehenden Anspruch, wobei die nachgiebigen Platten (52) in einem Winkel in Bezug auf die drehende Komponente (56) orientiert sind.

6. Dichtungsanordnung gemäß einem vorhergehenden Anspruch, wobei das ringförmige Widerstandsglied (72) einen durchlaufenden Ring umfasst.

7. Dichtungsanordnung gemäß einem der Ansprüche 1 bis 6, wobei das ringförmige Widerstandsglied (72) mehrere Segmente (302) umfasst, die zusammengebaut sind, um einen Ring zu bilden.

8. Turbomaschine, Folgendes umfassend:
eine stationäre Komponente (54);
eine drehende Komponente (56); und
die Dichtungsanordnung gemäß einem vorhergehenden Anspruch, die zwischen der stationären Komponente (54) und der drehenden Komponente (56) angeordnet ist.

9. Verfahren, Folgendes umfassend:
Entfernen einer vorhandenen Dichtungsanordnung, die zwischen einer stationären Komponente (54) und einer drehenden Komponente (56) einer Turbomaschine (40) liegt; und
Ersetzen der vorhandenen Dichtungsanordnung mit einer Dichtungsanordnung gemäß einem der Ansprüche 1 bis 7.

## Revendications

1. Ensemble d'étanchéité (50) configuré pour assurer une étanchéité entre une zone de haute pression et une zone de basse pression dans une turbomachine (40), l'ensemble d'étanchéité comprenant :
une pluralité de plaques souples (52) disposées entre un composant stationnaire (54) et un composant rotatif (56) de la turbomachine et couplées sur la périphérie le long du composant stationnaire, dans lequel chaque plaque souple comprend une pointe (68) configurée pour être disposée en regard du composant rotatif, au moins une fente de plaque (70) s'étendant du composant stationnaire (54) vers le composant rotatif (56) ; et
au moins un élément de résistance annulaire (72) configuré pour être couplé au composant stationnaire et disposé dans la au moins une fente de plaque (70) dans les plaques souples (52), **caractérisé en ce qu'**il comprend en outre une fente de pointe (164) dans une portion de la pointe (164) proche de la zone de haute pression vers la zone de basse pression et comprend une fente de forme triangulaire.

2. Ensemble d'étanchéité selon l'une quelconque des revendications précédentes, dans lequel la fente de pointe (164) s'étend jusqu'à 50 pour-cent d'une envergure de la pointe.

3. Ensemble d'étanchéité selon l'une quelconque des revendications précédentes, dans lequel la fente de pointe (164) est configurée pour effectuer une distribution de pression sur la pointe des plaques souples (52) telle qu'un dégagement défini soit établi entre la pointe de la pluralité de plaques souples (52) et le composant rotatif (56) au cours du fonctionnement de la turbomachine.

4. Ensemble d'étanchéité selon la revendication 3, dans lequel le dégagement défini dépend d'au moins l'une d'une pression à laquelle l'ensemble d'étanchéité (50) est actionné et du type de turbomachine.

5. Ensemble d'étanchéité selon l'une quelconque des revendications précédentes, dans lequel les plaques souples (52) sont orientées sous un certain angle par rapport au composant rotatif (56).

6. Ensemble d'étanchéité selon l'une quelconque des revendications précédentes, dans lequel l'élément de résistance annulaire (72) comprend un anneau continu.

7. Ensemble d'étanchéité selon l'une quelconque des revendications 1 à 6, dans lequel l'élément de résistance annulaire (72) comprend une pluralité de segments (302) assemblés pour former un anneau.

8. Turbomachine comprenant :
un composant stationnaire (54) ;
un composant rotatif (56) ; et
l'ensemble d'étanchéité selon l'une quelconque des revendications précédentes disposé entre le composant stationnaire (54) et le composant rotatif (56).

9. Procédé comprenant les étapes consistant à :
retirer un ensemble d'étanchéité existant disposé entre un composant stationnaire (54) et un composant rotatif (56) d'une turbomachine (40) ; et
remplacer l'ensemble d'étanchéité existant par un ensemble d'étanchéité selon l'une quelconque des revendications 1 à 7.
